# EUROPEAN PATENT APPLICATION

(11) **EP 3 130 312 A1**
(43) Date of publication of application: **15.02.2017**
(21) Application number: 15809110.8
(22) Date of filing: 11.06.2015
(51) Int. Cl.: A61C 13/093, A61C 13/08, A61C 13/10

(54) **ARTIFICIAL TOOTH**

(30) Priority: 18.06.2014 JP 2014125467
(71) Applicant: GC Corporation, Bunkyo-ku Tokyo 113-0033 (JP); GC Dental Products Corporation, Kasugai-shi, Aichi 486-0844 (JP)
(72) Inventor: MICHII, Takayuki, Tokyo 174-8585 (JP); KUMAGAI, Tomohiro, Tokyo 174-8585 (JP); MATSUURA, Daisuke, Kasugai-shi Aichi 486-0844 (JP); NAKASHIMA, Hiroyuki, Kasugai-shi Aichi 486-0844 (JP)
(74) Representative: Müller-Boré & Partner Patentanwälte PartG mbB
(86) International application number: PCT/JP2015/066842
(87) International publication number: WO 2015/194449

(57) **Abstract**

Provided is an artificial tooth that can be unfailingly attached to a denture base in arranging the artificial tooth on the denture base designed and formed with a CAD/CAM, including a convex portion (21a) to be inserted in an internal corner (13a) of a concave portion (13) of the denture base, wherein the convex portion is configured to form a predetermined gap with the internal corner without having contact with the internal corner when inserted in the internal corner.

## Description

### TECHNICAL FIELD

The present invention relates to artificial teeth.

### BACKGROUND ART

A lost wax technique is one of well-known methods for producing plate dentures. With this technique, a plate denture may be obtained via the following steps. That is, first, an impression of a patient's oral cavity is taken by means of an impression material (so-called impression taking). Then, plaster is poured in the mold and solidified, whereby a plaster model is made. Next, by a wax, the heights of the upper and lower jaw dentures are secured on the plaster model. Then, artificial teeth are embedded in the wax, to be wax dentures (so-called artificial teeth arrangement). After that, the wax dentures are buried by plaster or the like, to be fixed, and at the same time a path for the wax to flow out is formed. The wax is made to melt by hot water or the like, then made to flow out. Whereby, only the arranged artificial teeth remain, and a hollow is made at the portion where the wax used to exist. To the hollow, resin or the like is poured in (packed in) to be cured. Then, a plate denture can be obtained by cracking and removing the plaster.

As described, the lost wax technique includes many steps, and needs a lot of time to complete. Skills of dental technician are required to make a plate denture by the method.

In contrast, Patent Literatures 1 and 2 disclose techniques of manufacturing a dental prosthesis such as plate denture, by means of CAD/CAM. That is, by CAD/CAM, steps from designing to manufacturing of a dental prosthesis are treated as data, and based on the data, a dental prosthesis is finally cut out by a NC processing machine. According to this, less steps are required than the lost wax technique, and a dental prosthesis can be produced in a shorter time than before.

### Citation List

### Patent Literatures

- Patent Literature 1:: JP H09-206320 A
- Patent Literature 2:: JP 2002-224143 A

### SUMMARY OF INVENTION

### Technical Problem

However, when a plate denture is produced with a CAD/CAM, a resin material which is harder than wax needs to be used to cut out and produce a denture base. To the concave portions provided to the harder denture, artificial teeth of ceramics, resin, and the like that are preliminarily formed need to be fitted and arranged, then fixed by an adhesive. In this regard, the artificial teeth sometimes do not properly fit in the concave portions of the plate denture produced by cutting.

An object of the present invention is to provide an artificial tooth that can be unfailingly attached to a denture base designed and formed with a CAD/CAM, when the artificial tooth is arranged on the denture base.

### Solution to Problem

The inventor of the present invention found that the fitting of an artificial tooth to the concave portion of the denture base is obstructed by the tip of the artificial tooth, having contact with a base and so on of the concave portion of the denture base, before the artificial tooth reaches the position to fit in. The present invention is completed based on the above finding. Hereinafter, the present invention will be described. For the purpose of easy understanding, reference numerals given in the accompanying drawings are shown here in parentheses. However, the present invention is not limited to this.

The present invention is an artificial tooth (21) of a shape corresponding to a denture base (11) designed and cut out on a CAD based on three-dimensional data, the artificial tooth including a convex portion (21 a) to be inserted in an internal corner (13a) of a concave portion (13) of the denture base, wherein the convex portion is configured to form a predetermined gap with the internal corner without having contact with the internal corner when the convex portion is inserted in the internal corner.

In the present invention, an angle formed by the convex portion (21 a) may be the same as or smaller than an angle formed by the internal corner (13a).

In the present invention, the angle formed by the convex portion (21a) may be in the range of from 20° to 120°.

In the present invention, a curvature radius of a tip of the convex portion (21 a) may be the same as or smaller than a curvature radius at a deepest portion of the internal corner (13a).

In the present invention, the curvature radius of the tip of the convex portion (21a) may be in the range of from 0.3 mm to 1.5 mm.

In the present invention, the curvature radius of the tip of the convex portion (21 a) may be larger than a diameter of a cutting tool for forming the internal corner (13) of the denture base (11).

### Advantageous Effects of Invention

According to the present invention, an artificial tooth is arranged in a denture base. The denture is designed and formed with a CAD/CAM. The artificial tooth can be properly attached to the denture base, in a proper posture and position to be taken when the artificial tooth is fitted.

### BRIEF DESCRIPTION OF DRAWINGS

Fig. 1 shows an appearance of a plate denture 10;
Fig. 2A is a cross-sectional view of the plate denture 10;
Fig. 2B is an exploded cross-sectional view of Fig. 2A;
Fig. 3 shows an appearance of a denture base 11;
Fig. 4 shows an appearance of an artificial tooth 21;
Fig. 5A is a cross-sectional view of a portion shown by Va in Fig. 2A;
Fig. 5B is a view showing the denture base 11 and the artificial tooth 21 separated from each other and seen from the same viewpoint as in Fig. 5A;
Fig. 6 is a block diagram to conceptually show a designing machine 30;
Fig. 7 is a flowchart to show a method S1 for manufacturing a plate denture;
Fig. 8 is a flowchart to show a step S20 for designing a plate denture; and
Fig. 9 is a flowchart to show a step S30 for producing a plate denture.

### DESCRIPTION OF EMBODIMENTS

Hereinafter the present invention will be described based on embodiments shown in the drawing. However, the present invention is not limited to these embodiments.

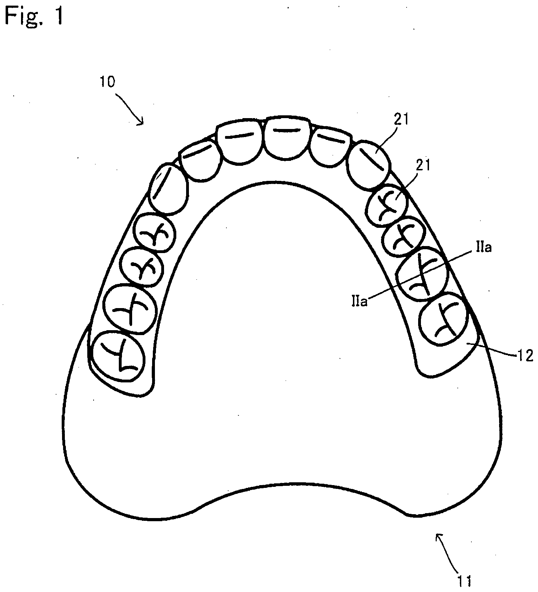

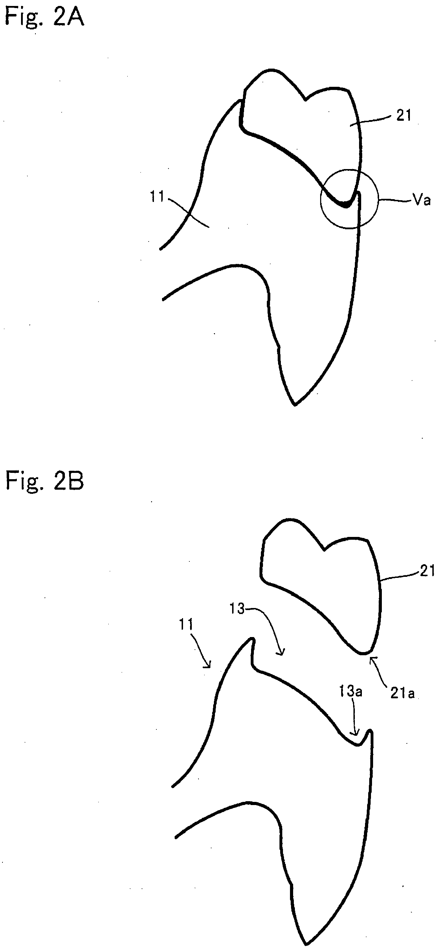

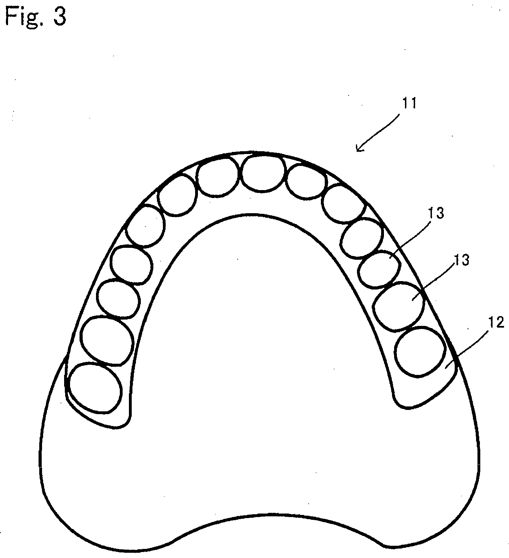

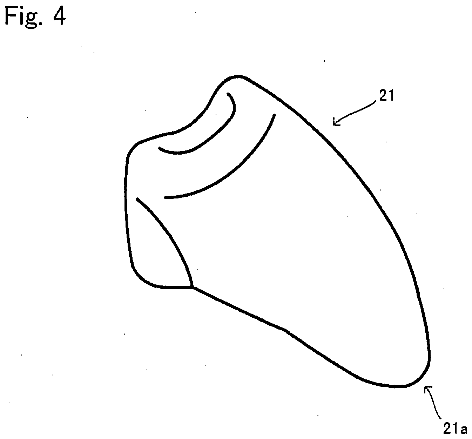

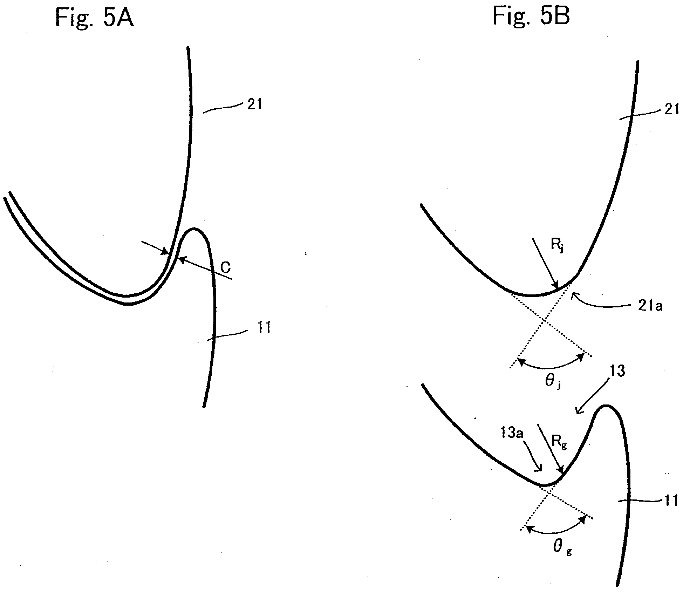

Fig. 1 is a view to explain one embodiment, showing an appearance of a plate denture 10 including an artificial tooth 21. The plate denture 10 like this is arranged on a lower jaw side and/or an upper jaw side in a patient's oral cavity, to artificially make up for defective natural teeth. As seen from Fig. 1, the plate denture 10 includes a denture base 11 and a plurality of artificial teeth 21, 21, ···. Fig. 2A is a cross-sectional view cut along IIa-IIa in Fig. 1, and Fig. 2B is an exploded view of Fig. 2A. Fig. 3 shows an appearance of the denture base 11. Fig. 4 is a perspective view of an appearance of the artificial tooth 21 according to one example. Fig. 5A is an enlarged view of the portion shown by Va in Fig. 2, the portion near a convex portion 21a of the artificial tooth 21 and an internal corner 13a of the denture base 11. Fig. 5B shows the artificial tooth 21 and the denture base 11 separated from each other and seen from the same viewpoint as in Fig. 5A. In this embodiment, a plate denture that makes up for, as the plate denture 10, the whole jaw of one side is explained as one example. However, the plate denture 10 may be a partial plate denture that makes up for part of defective natural teeth.

The denture base 11 is a member having functions to keep the artificial tooth 21 at a predetermined position and stably attach the plate denture itself on the oral mucosa. In this embodiment, as seen from Fig. 3, the denture base 11 includes a bank 12 that rises like a bank as a portion to which the artificial tooth 21 is to be arranged. The denture base also includes a concave portion 13 at the top of the bank 12. One end of the artificial tooth 21 is inserted in the concave portion 13 and the artificial tooth 21 is fixed to the denture base 11 by an adhesive.

Here, in the concave portion 13 of the denture base 11, the internal corner 13a where the tip portion of the artificial tooth 21 is to be arranged forms an angle whose minimum value is θ_{g}, at a cross section including the deepest portion of the internal corner 13a as shown in Fig. 5B. This θ_{g} is not particularly limited, and normally depends on the diameter of a cutting tool, in view of fitting the artificial tooth 21 and efficiently manufacturing the denture base 11 by cutting. According to this, θ_{g} is normally in the range of from 20° to 120° in many cases. Here, "internal corner" means the corner formed inside the concave portion 13.

In addition, as shown in Fig. 5B, the deepest portion of the internal corner 13a has a curvature radius of Rg (mm). The value of this Rg is not particularly limited, and normally depends on the shape of the tip of the cutting tool, because the denture base 11 is produced by cutting. According to the tool to cut the portion, Rg is normally approximately 1.0 mm in many cases.

Here, it is preferable that the denture base 11 be formed of a hard material such as resin, metal and ceramic sintered body. This makes it possible to carry out accurate cuttings.

The artificial tooth 21 is an artificial tooth produced to serve as a substitute for a defective natural tooth, having a function of the natural tooth. One end side of the artificial tooth 21 is inserted in the concave portion 13 of the denture base 11 and fixed by an adhesive, whereby the artificial tooth 21 is held. This makes it possible for the plurality of artificial teeth 21, 21, ··· to be arranged in an arching line like a tooth row and function like natural teeth.

As seen from Figs. 2A, 2B, 4, 5A and 5B, the artificial tooth 21 includes at least one convex portion 21a whose tip is pointed, at the end portion to be fitted in the denture base 11.

Here, the convex portion 21 a of the artificial tooth 21 has a maximum value of θⱼ at a cross section including the utmost tip of the artificial tooth 21, as shown in Fig. 5B. This θⱼ is the same as or smaller than θ_{g} of the internal corner 13a of the concave portion 13 of the denture base 11. It is also preferable that θⱼ be in the range of from 20° to 120°, in the range of the same as or smaller than θ_{g}.

In addition, as shown in Fig. 5B, the utmost tip of the convex portion 21a has a curvature radius of Rⱼ (mm). The value of Rⱼ is the same as or smaller than a curvature radius R_{g} of the deepest portion of the above-described internal corner 13a of the denture base 11. Rⱼ is preferably in the range of from 0.3 mm to 1.5 mm. Considering that R_{g} of the internal corner 13a of the denture base 11 is approximately 1.0 mm in many cases, Rⱼ is more preferably in the range of from 0.3 mm to 1.0 mm.

Here, a known material used for artificial teeth may be used for the artificial tooth 21. Examples thereof include ceramic, resin, hard resin and metal. As a material to adhere the artificial tooth 21 to the denture base 11, a known material may be used. Examples thereof include quick cure resin, gum-colored resin, resin for denture base, known industrial adhesives such as epoxy adhesive, and mixtures of at least two of them.

The artificial tooth 21 described above is attached to the concave portion 13 of the denture base 11 in the following manner. That is, one end side of the artificial tooth 21 is fitted in a manner to be inserted in the concave portion 13. At this time, the convex portion 21a of the artificial tooth 21 is inserted toward the internal corner 13a of the concave portion 13 of the denture base 11. In addition, as seen from Fig. 5A, a predetermined gap C is formed between the convex portion 21a of the artificial tooth 21 and the internal corner 13a of the concave portion 13 of the denture base 11. That is, the artificial tooth 21 and the concave portion 13 are produced in a manner to form such a gap C. The size of the gap C is not particularly limited, and preferably in the range of from 100 µm to 500 µm.

According to the above structure of the present invention, in which the convex portion 21a of the artificial tooth 21 and the internal corner 13a of the concave portion 13 of the denture base 11 has a relationship as described above, the artificial tooth 21 is fitted at a proper position in the concave portion 13, and it is possible to attach the artificial tooth 21 in its proper position and posture to the denture base 11, without making the convex portion 21a have contact with the inner surface of the concave portion 13. It is noted that the artificial tooth 21 and the denture base 11 have contact with each other at a portion other than the convex portion 21 a and the concave portion 13, whereby the artificial tooth 21 is kept by the denture base 11.

By using an artificial tooth like the above, arrangements of artificial teeth in their proper postures can be unfailingly carried out on a plate denture that can be produced with a CAD/CAM faster and easier than before. Hereinafter a method for manufacturing a plate denture including the artificial tooth of the above embodiment will be described.

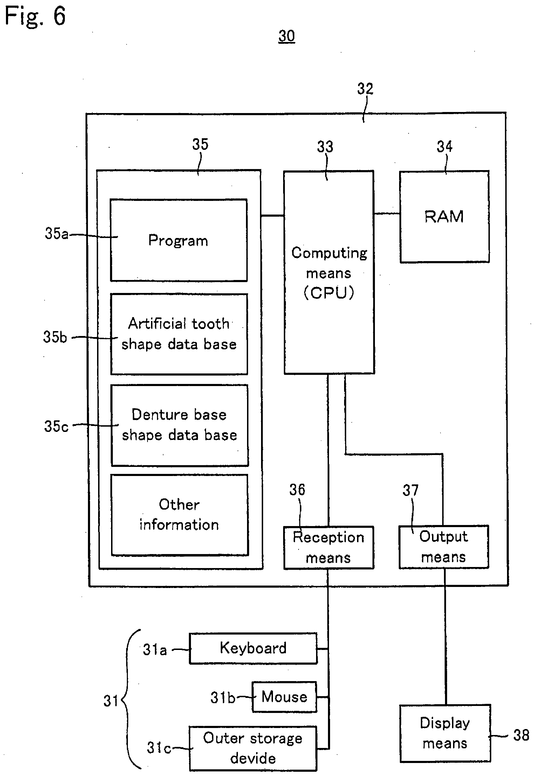

Fig. 6 is a block diagram conceptually showing a structure included in a plate denture designing machine 30 according to one embodiment. The plate denture designing machine 30 (hereinafter may be referred to as "designing machine 30") includes an input means 31, a computing device 32 and a display means 38. The computing device 32 includes a computing means 33, a RAM 34, a storage means 35, a reception means 36 and an output means 37. The input means 31 includes a keyboard 31 a, a mouse 31 b and an outer storage device 31 c that functions as one of storage media.

The computing means 33 is constituted by a so-called CPU (central processing unit) and connected to each constituent member described above, to control them. The computing means 33 is also configured to run various programs 35a in the storage means 35 and the like functioning as storage media, and based on the programs, carry out operations as a means of generating and selecting various data that are described later.

The RAM 34 is a constituent member that functions as a work area of the computing means 33 and as a temporal data storage means. The RAM 34 is the same as known RAMs, and may be constituted from SRAM, DRAM, flush memory and the like.

The storage means 35 is a member that functions as a storage medium where programs and data to be the basis of each operation are stored. The storage means 35 may also store various intermediate and final results obtained by the operations of the programs. More specifically, the storage means 35 stores the programs 35a, an artificial tooth shape data base 35b and a denture base shape data base 35c. Other information may also be stored therein.

The programs 35a are programs required for the operations of the designing machine 30, which are not particularly limited.

The artificial tooth shape data base 35b is a data base in which information of the shapes of the artificial teeth and the like are stored. The kind of the artificial tooth shape to be stored in the data base is not particularly limited. For example, data in which a plurality of the artificial teeth included in a dental arch form one group and upper and lower dental arches are in an occlusal position may be stored. The data may be constituted in a manner that each artificial tooth may be separately treated, and that the data is divided into several units each including several artificial teeth. These groups of the artificial teeth are preferably prepared having a plurality of variations for conforming to the patient' s characteristics, such as "sex" and "physical build". The artificial tooth shape data base 35b also includes the shape of the convex portion 21 a described above.

The denture base shape data base 35c is a data base in which information of the shape and the like regarding denture bases are stored. The configuration of the data of the denture bases stored in the data base is not particularly limited. For example, data of "only an upper half of a denture base that includes the portion where the artificial tooth is to be attached" arranged having a positional relationship (e.g. value of the above-described gap C) with the artificial tooth data in an occlusal position may be stored. The data preferably have variations of 3 or 4 kinds of sizes in combination with the sizes of the artificial tooth. The denture base shape data base 35c also includes the shape of the above-described internal corner 13a.

The reception means 36 is a constituent member having a function to properly take information from the outside to the computing device 32. The input means 31 is connected to the reception means 36. A so-called input port, input connector and the like are also included therein.

The output means 37 is a constituent member having a function to properly output information to be output to the outside from the obtained results, to which the display means 38 such as monitor, and various devices are connected. A so-called output port, output connector and the like are also included therein.

The input device 31 includes for example the keyboard 31 a, the mouse 31b, the outer storage device 31c and the like. Known keyboards and mouses may be used for the keyboard 31 a and mouse 31b, whose descriptions are omitted. The outer storage device 31 c is a known storage means that can have an outer connection and also functions as a storage medium. In the outer storage device 31c, necessary programs and data can be stored without particular limitations. For example, the same programs and data as in the above-described storage means 35 may be stored. Impression data and data about occlusion that are to be the basis of the data generation by the computing device 30 may also be stored in the outer storage device 31c. A known device can be used for the outer storage device 31c. Examples thereof include CD-ROMs, CD-ROM drives, DVDs, DVD drives, hard discs, various types of memories.

In addition, information may be provided to the computing device by networks and communications, via the reception means 36. Similarly, information can be transmitted to outside devices (e.g. NC processing machine) by networks and communications, via the output means 37.

According to the designing machine 30 like this, it is possible to directly cut out denture bases and to manufacture plate dentures without going through complicated steps like in the lost wax technique.

Next, with the designing machine 30, the method S1 (may be referred to as "manufacturing method S1") for manufacturing the plate denture 10 will be described. For the purpose of easy understanding, an example in which the designing machine 30 is used is described here. However, the manufacturing method is not limited to this, and can be carried out by means of another machine, as long as the method including the following purports can be carried out.

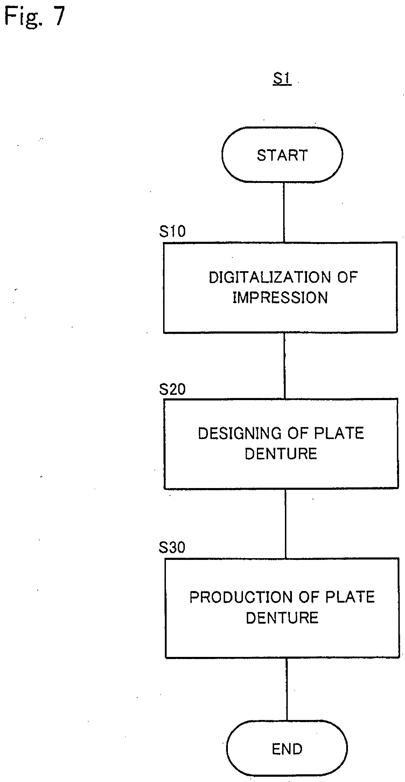

Fig. 7 shows the flow of the manufacturing method S1. As seen from Fig. 7, the manufacturing method S1 includes a step S10 for digitalization of an impression, a step S20 for designing a plate denture and a step S30 for producing the plate denture. Each step is described below.

S10 is a step for obtaining CAD data regarding the shape and occlusion from an obtained impression. The impression itself is taken by a known impression taking, and from the impression, information about the patient' s mucosal surface, such as plaster model, may be obtained.

The method for obtaining the CAD data may be carried out by means of a known device, such as three-dimensional optical scanner. Meanwhile, the data regarding occlusion may be obtained from three-dimensional measurements of the upper jaw impression and the lower jaw impression paired in the same way as the patient' s occlusal condition.

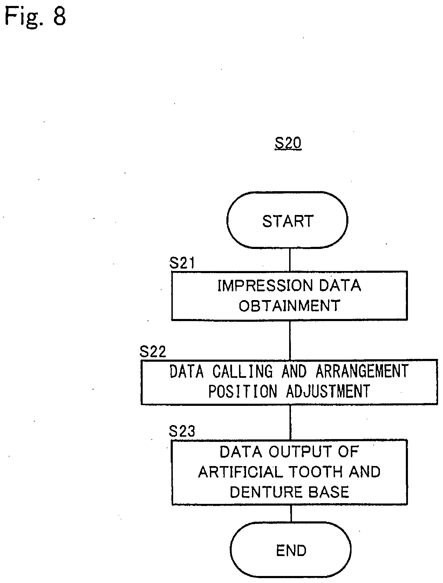

S20 is a step of: determining, finally on data, the shape of the plate denture 10, based on the information of the patient' s mucosa surface obtained in S10 and the data base stored in the designing machine 30; and deleting the data of the artificial teeth from the data of the plate denture in which the arrangement is completed, to output processing data for cutting a denture base to S30 (to processing machine) for producing the plate denture. Here, each operation in S20 in this embodiment is carried out by the designing machine 30. That is, the operation is proceeded by the computing means 33 carrying out operations according to the programs 35a stored in the storage means 35 provided to the designing machine 30. Fig. 8 shows the flow of S20. As seen from Fig. 8, S20 includes a step S21 for obtaining impression data, a step S22 for data calling and adjusting arrangement position, and a step S23 for outputting data of the artificial teeth and denture base.

S21 is a step of obtaining information regarding the impression formed into data in S10 and taking them in the designing machine 30. The taken information is stored in the storage means 35 via the reception means 36 of the designing machine 30.

S22 is a step of calling the information from the data base and arranging the artificial teeth on the designing machine 30. That is, data of the artificial teeth consistent with the dental arch are called from the data base stored in the storage means 35 of the designing machine 30, based on the information taken by the above steps. Then, the artificial teeth are roughly positioned on the ridges, and their positions are finely adjusted.

S23 is a step of separately extracting, from the shape determined in S22, the shape data of the artificial teeth and the shape data of the denture base, and outputting the data as command data to the processing machine to be used in S30. The output can be carried out via the output means 37 of the designing machine 30.

In S20 for designing a plate denture, the efficiency of the cutting is considered, and the tools for the cutting are selected. If the artificial teeth and denture base are formed without consideration of the efficiency of the cutting, it is required that the cutting is carried out by means of a lot of tools used in turn, in a manner to eventually change the tools to fine tools, which is not always proper in view of productivity. Accordingly, it is necessary that the tools to be used are limited in a predetermined coverage, to consider the efficiency of the cutting. Thus, the shapes of the artificial teeth and denture base that can be manufactured based on the tools selected with consideration of the efficiency are finally transmitted to S30 as command data. At this time, in order to make the convex portion 21 a of the artificial tooth 21 and the internal corner 13a of the concave portion 13 have the above-described shapes, it is preferable that the curvature radius of the tip of the convex portion 21 a of the artificial tooth 21 be larger than the diameter of the cutting tool for forming the internal corner 13a of the concave portion 13 of the denture base 11. That is, the above described shapes of the convex portion 21a of the artificial tooth 21 and the internal corner 13a of the concave portion 13 of the denture base 11 are shapes with which the artificial tooth can be attached, in its proper position and posture, to the denture base, under the premise that the artificial tooth and denture base are made with the cutting accuracy with consideration of the efficiency of the cutting.

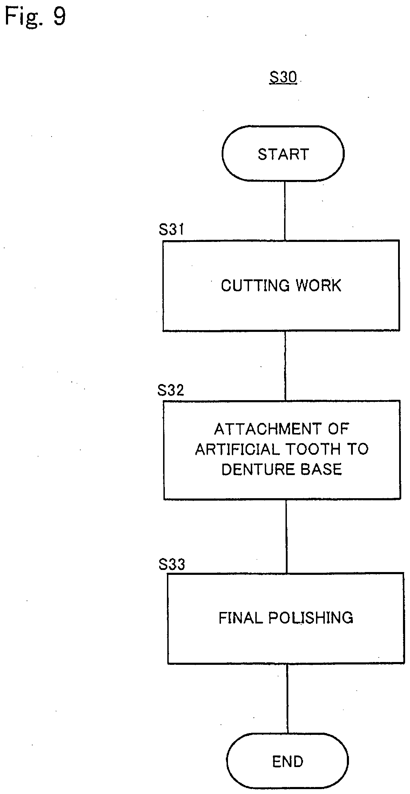

Back to Fig. 7, S30 will be described. S30 is a step of receiving the processing data for the denture outputted from S20, cutting out the shapes of the denture by the processing machine, and combining the shapes to finish as the plate denture 10. Fig. 9 shows the flow of S30. As seen from Fig. 9, S30 includes a step S31 for cutting work, a step S32 for attaching artificial teeth to a denture base, and a step S33 for final polishing.

S31 is a step of receiving the command data outputted in S23 to the processing machine, and based on the data, cutting a denture base by cutting work of the processing machine. The processing machine used here may be a known processing machine. A known NC processing machine may be used without particular limitations. Because the material of the denture base applied here is a hard material, such as hard resin, metal and ceramic, the cutting is carried out properly and accurately.

S32 is a step of attaching the artificial teeth obtained in S31 to the denture base. As described above, one end side of the artificial tooth 21 is fixed in a manner to be fitted in the concave portion 13 of the denture base 11. Here, the convex portion 21 a of the artificial tooth 21 and the internal corner 13a of the concave portion 13 have the above-described relationship. Thus, a proper attachment of the artificial tooth can be carried out. Then, an adhesive is provided between the artificial tooth 21 and the concave portion 13 arranged facing to each other, by coating and so on. Whereby, the artificial tooth 21 is fixed to the concave portion 13.

S33 is a step of carrying out final polishing on the plate denture obtained in S32, to finally obtain the plate denture 10.

As described above, according to the manufacturing method S1, it is possible to obtain the plate denture 10 of good accuracy, without taking time and effort like in the lost wax technique. In this method, the denture base 11 is formed of a hard material such as hard resin, metal and ceramic sintered body, by cutting.

### Description of Reference Numerals

- 10: plate denture
- 11: denture base
- 12: bank
- 13: concave portion
- 13a: internal corner
- 21: artificial tooth
- 21a: convex portion

## Claims

1. An artificial tooth of a shape corresponding to a denture base designed and cut out on a CAD based on three-dimensional data, the artificial tooth comprising a convex portion to be inserted in an internal corner of a concave portion of the denture base,
wherein
the convex portion is configured to form a predetermined gap with the internal corner without having contact with the internal corner when the convex portion is inserted in the internal corner.

2. The artificial tooth according to claim 1, wherein an angle formed by the convex portion is the same as or smaller than an angle formed by the internal corner.

3. The artificial tooth according to claim 2, wherein the angle formed by the convex portion is in the range of from 20° to 120°.

4. The artificial tooth according to any one of claims 1 to 3, wherein a curvature radius of a tip of the convex portion is the same as or smaller than a curvature radius at a deepest portion of the internal corner.

5. The artificial tooth according to claim 4, wherein the curvature radius of the tip of the convex portion is in the range of from 0.3 mm to 1.5 mm.

6. The artificial tooth according to claim 4 or 5, wherein the curvature radius of the tip of the convex portion is larger than a diameter of a cutting tool for forming the internal corner of the denture base.
